# EUROPEAN PATENT SPECIFICATION

(11) **EP 1 768 207 B1**
(45) Date of publication and mention of the grant of the patent: **18.08.2010**
(21) Application number: 06019324.0
(22) Date of filing: 15.09.2006
(51) Int. Cl.: H01M 8/06, H01M 8/04, H01M 8/12

(54) **Method for generating electricity using a solid oxide fuel cell stack and ethanol**
Verfahren zur Erzeugung von Elektrizität mittels eines Festelektrolytstapels und Ethanol
Procédé pour la génération d'électricité utilisant une pile à combustible à oxyde solide et éthanol

(30) Priority: 27.09.2005 DK 200501349
(43) Date of publication of application: 28.03.2007
(73) Proprietor: Haldor Topsoe A/S, 2800 Kgs. Lyngby (DK)
(72) Inventor: Hansen, John Bogild, 2100 Copenhagen Ø (DK); Dahl, Soren, 3400 Hillerod (DK)

(56) References cited:
- EP-A2- 1 603 181
- DE-A1- 10 143 656
- US-A- 4 298 694
- US-A- 5 595 833
- US-A- 5 736 026
- US-A1- 2003 219 637
- JENS R. ROSTRUP-NIELSEN: "Conversion of hydrocarbons and alcohols for fuel cells" PHYS. CHEM. PHYS., vol. 3, 2001, pages 283-288, XP002413149
- S. FRENI ET AL.: "Hydrogen production by steam reforming of ethanol: a two step process" REACT. KINET. CATAL. LETT., vol. 71, no. 1, 2000, pages 143-152, XP002413150
- C. A. LUENGO ET AL.: "A novel catalyst system for ethanol gasification" INT. J. HYDROGEN ENERGY, vol. 17, no. 9, 1992, pages 677-681, XP002413151

## Description

The invention relates to a method for processing a liquid-fuel comprising ethanol and generating electricity.

### BACKGROUND OF THE INVENTION

Ethanol could be an attractive fuel for use in SOFC combined heat and power plants, for instance those plants intended for use as auxiliary power units for trucks and marine applications. Potentially the fuel processing steps in such a plant could be very simple ultimately being only evaporation of the ethanol and injection into the anode chamber of the SOFC.

This approach would, however, lead to a number of problems and disadvantages:
Saunders, G.J. et al. (Formulating liquid hydrocarbon fuels for SOFCs, Pages 23-26, from Journal of Power Sources Volume 131, Issues 1-2, Pages 1-367 (14 May 2004)) show that dry ethanol is very prone to form carbon at conditions prevailing in the anode chamber of the SOFC with the most active Ni-cermets as anode material, resulting in deactivation of the SOFC after a few hours of operation. It is well known that it is very difficult to avoid carbon formation from ethanol on Ni containing catalyst under steam reforming conditions where ethanol is reacted with steam. The reason for this being dehydration of ethanol to ethylene which then polymerises, as shown in reaction [1]:

   CH₃CH₂OH→ CH₂CH₂ → [CH₂-CH₂]ₙ- → C₂nH₂₍ₙ₋ₘ₎ + mH₂ [1]

The problem of coking involved with ethanol reforming catalysts is described, for example, by Haga et al. in Nippon Kagaku Kaishi, 33-6 (1997) and Freni et al. , in React. Kinet. Catal. Lett. , 71, page 143-52 (2000). Thus, reforming of the ethanol in the anode chamber by adding water (internal reforming) is not a simple way to alleviate the problem with carbon formation.

Carbon formation on steam reforming catalysts and in a SOFC plant can also take place by the following reversible reactions:

CH₄ ↔ C + 2 H₂ (-Δ H₂₉₈ = -74.9 kJ/mol) [2]

2 CO ↔ C + CO₂ (-Δ H₂₉₈ = 172.4 kJ/mol) [3]

Reaction [3] is known as the Boudouard reaction. Ethanol can decompose to CO according to reaction [4]

CH₃CH₂OH ↔ CO + H₂ + CH₄ (-Δ H₂₉₈ = - 51,3 kJ/mol) [4]

As CO is quite reactive, it is important to know the temperature and gas composition ranges, where reaction [3] does not occur. This can be studied using "the principle of the equilibrated gas" assuming both methanation/steam reforming (reaction [5]) and the shift reaction (reaction [6]) to be in equilibrium, as further described by Nielsen, J.R. (Catalytic Steam Reforming, Springer Verlag, Berlin 1984).

CH₄ + 2H₂O ↔ CO₂ + 4H₂ (-Δ H₂₉₈ = -165.0 kJ/mol) [5]

CO + H₂O ↔ CO₂ + H₂ (-Δ H₂₉₈ = 41.2 kJ/mol) [6]

Sasaki, K. and Teraoka, Y. (Equilibria in Fuel Cell Gases Pages 1225-1239 from Solid Oxide Fuel Cells VIII (SOFC VIII) Proceedings Volume 2003-07) have studied the amount of water needed to avoid carbon formation.

A further disadvantage of using ethanol as direct fuel in an SOFC compared to using methane is related to the heat of reactions when steam reforming this fuel. Steam reforming of methane is given in equation 4 and the reforming reactions for ethanol is given in equation 6:

CH₄ + 2 H₂O ↔ CO₂ + 4 H₂ (-Δ H₁₀₂₃ = -191.4 kJ/mol) [4]

CH₃CH₂OH + 3H₂O ↔ 2CO₂ + 6 H₂ (-Δ H₁₀₂₃ = -209 kJ/mol) [6]

Reforming of the fuel in the anode chamber (internal reforming) helps to cool the stack due to the endothermal nature of the reforming process. However, the heat of reactions for ethanol reforming are much less endothermic (pr H₂ produced) than methane steam reforming, therefore the cooling of the stack provided by steam reforming of ethanol is less effective.

The method of the invention describes a process lay-out where all the above problems are overcome by adiabatically converting ethanol into a mixture of methane, H₂, CO, CO₂ and water.

It is an objective of the invention to provide a method for generating electricity for solid oxide fuel cells, whereby the fuel ethanol is adiabatically converted to a mixture of methane,

The review "Conversion of hydrocarbons and alcohols for fuel cells", PHYS. CHEM. PHYS., vol. 3, 2001, pages 283-288, by J. R. Rostrup-Nielsen, mentions amongst other fuels the conversion of ethanol by steam reforming. Steam reforming of ethanol is also mentioned in S. Freni et al.: "Hydrogen production by steam reforming of ethanol: a two step process" REACT. KINET. CATAL. LETT., vol. 71, no. 1, 2000, pages 143-152.

DE 101 43 656 A1 discloses a combination of a cracker and a fuel cell. The fuel to be cracked can be an alcohol. The fuel cell can be a SOFC. In an embodiment cracking is combined with methanisation which results in a gaseous mixture essentially consisting of H2 and CH₄.

US-A-5 736 026 teaches a system which generates electricity from biomass by converting the biomass into ethanol and generating electricity in a fuel cell which preferably is a self-reforming fuel cell which preferably has a molten carbonate electrolyte. However any fuel cell fuelled from partially dewatered alcohol can be used. In an embodiment the ethanol is methanated in a preconverter which is an adiabatic reactor.

H₂, CO, CO₂ and water before conversion in a solid oxide fuel cell.

### SUMMARY OF THE INVENTION

The invention therefore provides a method for generating electricity using a solid oxide fuel cell stack in combination with a methanation reactor comprising the steps of:
(a) supplying a feed stream comprising ethanol to a methanation reactor containing catalytic material active in the decomposition and methanation of ethanol

   CH₃CH₂OH ↔ CH₄ + CO + H₂ [4]

   CO + H₂O ↔ CO₂ + H₂ [6]

   CO + 3H₂ ↔ CH₄ + H₂O [8]
(b) converting the feed stream comprising ethanol in the methanation reactor under adiabatic conditions to produce an effluent fuel comprising methane, carbon monoxide, carbon dioxide, hydrogen and water and a temperature increase across the methanation reactor;
(c) transferring the effluent fuel comprising methane, carbon monoxide, carbon dioxide, hydrogen and water to the anode of a solid oxide fuel cell stack comprising at least one solid oxide fuel cell;
(d) providing the cathode of the solid oxide fuel cell stack with an oxygen-containing gas; and
(e) converting the fuel comprising methane, carbon monoxide, carbon dioxide, hydrogen and water and the oxygen-containing gas to electricity in the solid oxide fuel cell stack.

### BRIEF DESCRIPTION OF THE DRAWINGS

Fig. 1 is a schematic diagram of a conventional fuel processing system based on methane.
Fig. 2 is a schematic diagram of a fuel processing system based on ethanol.
Fig. 3 is a schematic diagram of a comparative fuel processing system based on ethanol.

### DETAILED DESCRIPTION OF THE INVENTION

By methanation of ethanol is meant in the following the conversion of ethanol in to a mixture of methane, H₂, CO, CO₂ and water.

In the method of the invention, a fuel comprising ethanol is adiabatically converted into a mixture of methane, hydrogen, carbon monoxide and carbon dioxide and water. In this way part of the chemical energy contained in the ethanol containing feed stream to the methanation reactor is converted to a temperature increase across the methanation reactor. This eliminates the need for the heat exchanger, which is usually required to heat the SOFC fuel to the temperature required at the anode inlet. In addition, ethanol is converted to methane, which is much less prone to carbon lay down than ethylene and carbon monoxide, which could be formed from the feedstock.

The ratio between oxygen and carbon (O/C ratio) in the methanation reactions is very important because this ratio gives an indication of the potential for carbon deposition. Ethanol decomposes via reaction [4] to form carbon monoxide, which in turn can decompose to form carbon via the Boudouard reaction [3]. The inherent O/C molar ratio for ethanol is 0.5. Generally the O/C ratio has a temperature dependency and a minimum value above which carbon formation is avoided. The relationship between the O/C ratio and carbon formation is dexcribed in detail by Nielsen, J.R., Catalytic Steam Reforming, Springer Verlag, Berlin 1984.

In the method of the invention, providing the process with extra oxygen increases the O/C ratio. This can be done by transporting oxygen from the cathode air via the fuel cell electrolyte to the anode off gas. The anode off gas is then recycled to the methanation reactor and thereby to the anode inlet. Adding water in substantial amounts to the system, e.g. together with the ethanol fuel, can also increase the O/C ratio.

Most suitable for use in the method of the invention is 96 vol% ethanol containing 4 vol% water. The O/C ratio can then be controlled by the addition of for instance water via recycle as mentioned earlier. However, less pure ethanol containing larger amounts of water can also be usd. By products stemming from the production of ethanol, e.g. by fermentation, are also allowed in the ethanol to a certain extent.

The preferred ethanol concentration in a fuel is 12 - 96 vol% More preferable 40 - 96 vol%. And most preferably 96 vol% ethanol is used.

Some of the anode off gas can be recycled to the methanation reactor using a recycling device such as a recycle blower or any other mechanically driven recycle apparatus or an ejector.

The recycle ratio is defined as the ratio of moles of anode off gas recycled to the methanation reactor relative to the total amount in moles of anode off gas. Recycle ratios of 0 - 80 % can be used. It is preferable that the recycling device recycles 50% to 60% of the anode off gas to the methanation reactor i.e. a recycle ratio of 50 to 60% is preferable.

At the same time the chemical energy converted into latent heat in the methanation reactor does not have to be removed by excess cathode air in the SOFC thus increasing overall electric efficiency of the system.

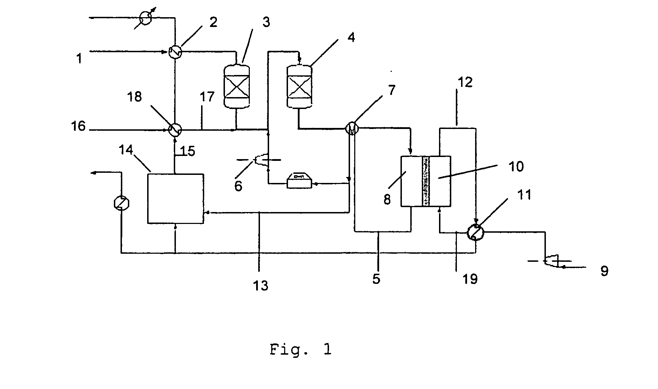

Fig. 1 is a schematic diagram of a conventional fuel processing system based on methane. Methane 1 in the form of natural gas is preheated in heat exchanger E1 2 and then desulphurised in a hydrodesulphurisation unit 3 by hot zinc oxide at 400°C followed by prereforming of the higher hydrocarbons present in the natural gas in a prereformer 4. This eliminates the risk of formation of unsaturated compounds at elevated temperatures by dehydrogenation of these higher hydrocarbons. These unsaturated compounds (mainly olefins) are prone to form carbon when heated to the required stack inlet temperature. The water (and CO₂) needed for prereforming is provided by a partial recycle of the anode off gas 5 by means of a blower 6 with intermediate cooling in heat exchanger E2 7.

The effluent from the prereformer 4 includes methane and is preheated to the inlet temperature of the anode stack by heat exchange with recycle anode off gas 5 in heat exchanger E2 7 and thereafter transferred to the anode 8. Reforming of methane takes place in the anode chamber according to reaction [5] and as this reaction is endothermic cooling of the stack occurs.

Air 9 is compressed and transferred to the cathode 10. The stack is kept adiabatic by means of an excess of cathode air 19, which is preheated in heat exchanger E3 11 by heat exchange with cathode off gas 12. The cathode air 19 also provides cooling of the stack.

The off gas 13 from the anode 8, which is not recycled to the prereformer 4 and the off gas 12 from the cathode 10, are finally burnt in a catalytic burner 14. The waste heat in the flue gas 15 from the catalytic burner 14 supplies heat for conversion of water 16 to steam 17 in heat exchanger E6 18 during start-up for natural gas preheating in heat exchanger E1 2 and heat for space heating or other purposes.

All of the components of this lay-out are known for use in fuel processing of natural gas with the exception of the SOFC stack itself and to some degree the hot anode recycle blower.

Replacing natural gas by ethanol in a conventional process layout of this nature would reduce the amount of cooling of the stack obtainable from the endothermic reforming reactions (internal reforming) of ethanol. Further cooling for reducing the temperature of the stack would therefore be required via the cathode air in addition to the amount already being provided. Subsequently, heat exchanger E3 11 would need to be considerably larger. The loss of electrical energy in the air compression step would also increase.

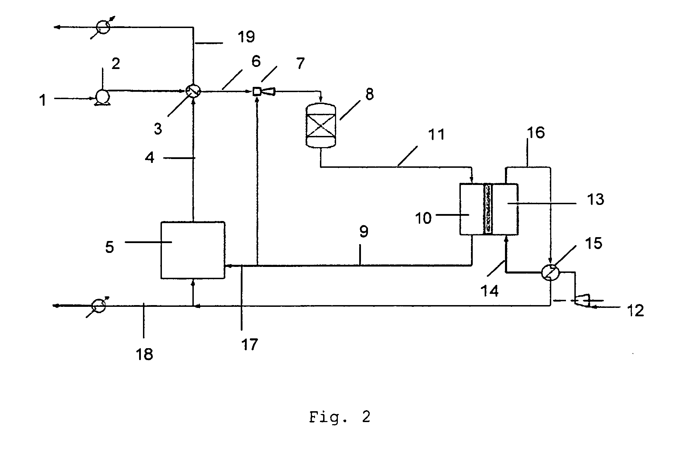

Fig. 2 is a schematic diagram of a fuel processing system based on ethanol and illustrating an embodiment of the invention. Liquid comprising ethanol 1 is compressed by means of the pump 2 and thereafter evaporated in heat exchanger E1 3 by means of waste heat in the flue gas 4 from a catalytic burner 5. The gaseous ethanol 6 leaving the heat exchanger E1 3 acts as the motive force in ejector 7, after which it is transferred to a methanation reactor 8. The methanation reactor 8 can have an inlet temperature of for instance 350°C and an outlet temperature of at least 460°C. Anode off gas 9 containing H₂, H₂O, CO, CO₂ and CH₄ from the solid oxide fuel cell anode 10 is partially recycled to the methanation reactor 8 via the ejector 7. The methanation reactor 8 is loaded with catalyst active for ethanol decomposition and methanation. The methanation reactions for ethanol are as follows:

CH₃CH₂OH ↔ CH₄ + CO + H₂ [4]

CO + H₂O ↔ CO₂ + H₂ [6]

CO + 3H₂ ↔ CH₄ + H₂O [8]

In the methanation reactor 8 ethanol is converted to a mixture of CH₄, H₂, H₂O, CO and CO₂ and the effluent 11 from the methanation reactor 8 is transferred to the anode 10 of the SOFC stack. The anode inlet temperature is at least 400°C, preferably at least 500°C.

Air 12 is compressed and transferred to the cathode 13. The stack is kept adiabatic by means of an excess of the compressed cathode air 14, which is preheated in heat exchanger E3 15 by heat exchange with cathode off gas 16 to a temperature of typically approximately 650°C.

The remaining anode off gas 17, which is not recycled to the ejector 7, is transferred to the catalytic burner 5 where it is burnt together with cathode off gas 16. The catalytic burner 5 operates with an exit temperature of typically approximately 700°C. The waste heat in the flue gas 4 from the catalytic burner 5 supplies heat for evaporation of ethanol in heat exchanger E1 3. The remaining cathode off gas 18 not sent to the catalytic burner 5 is suitable as depleted air and can be used for heat exchange.

In an embodiment of the invention 50% of the anode off gas 9 is recycled to ejector 7 and 50% is transferred to the catalytic burner 5. The 50% anode off gas recycle serves to increase the overall electric efficiency and at the same time give a better flow distribution in the anode chamber(s) due to a higher mass flow. Additionally, the O/C ratio is also increased at the inlet to the methanation reactor R1.

Using a recycle ratio of 50% and an ethanol feed of 96 vol% ethanol results in an O/C ratio of 1.9. This value ensures the absence of carbon formation in the solid oxide fuel cell via reactions [2] and [3].

In the fuel processing method of the invention, the anode off gas recycle ratio is not limited to 50%. Other values can be chosen in order to vary the O/C ratio. The recycle ratio can be optimised in combination with the choice of methanation catalyst.

Catalysts applicable in the methanation reactor are catalysts active in both decomposition and methanation of ethanol for instance a nickel, cobalt, copper or noble metal containing catalyst. A suitable noble metal containing catalyst is for instance a ruthenium containing catalyst or a rhodium containing catalyst.

In another embodiment of the invention a catalyst active in ethanol decomposition is installed in the methanation reactor upstream a catalyst active in methanation of the decomposed ethanol. An applicable upstream catalyst in the methanation reactor is a catalyst known in the art to decompose ethanol without forming ethylene. This could for instance be a catalyst capable of decomposing ethanol into methane, CO and H₂. This reaction is decribed by David A. Morgenstern and James P. Fornango (Energy Fuels, 19 (4), 1708 -1716, 2005) over a catalyst comprising Ni and Cu and by Galvita et al. (Appl. Catal. A: General 220 (2001) 123) over a catalyst comprising Pd.

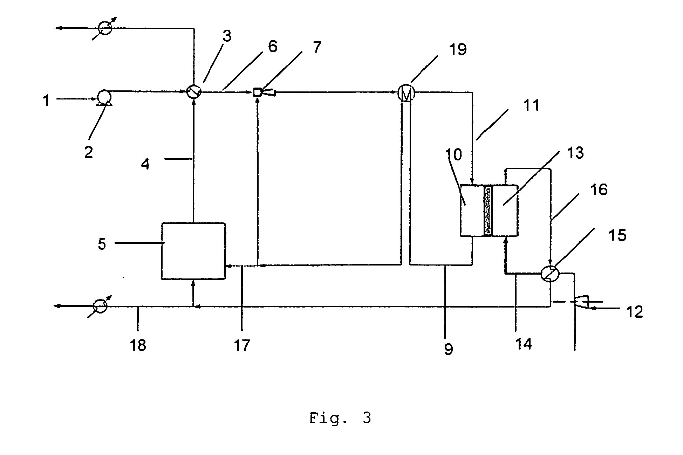

Fig. 3 is a schematic diagram of a comparative fuel processing system where the methanation reactor has been omitted from the process shown in Fig. 2 and the anode off gas recycle maintained. The reference numbers in this figure are identical to those of Fig. 2 unless otherwise stated.

In this processing system it is necessary to preheat the inlet gas 11 to the anode 10 in heat exchanger E2 19 as the temperature of the inlet gas 11 to the anode 10 would otherwise become too low. Heat exchanger E2 19 is prone to carbon lay down directly from ethanol via polymerisation of ethylene (reaction [1]), when the fuel processing system is operated with an anode off gas recycle percent of only 50% corresponding to an O/C ratio of 1.9 similar to that of the fuel processing system of the invention shown in Fig. 2.

A comparison of efficiency and duty for heat exchangers E1, E2 and E3 and the work for the air compressor in the fuel processing systems of Figs. 1-2 have been made. The main results are summarised in Table 1.

**Table 1**

| | **Conventional System** | **System of Invention** |
|---|---|---|
| | **(****Fig. 1****)** | **(****Fig. 2****)** |
| Electric efficiency (%) | 55.5 | 56.0 |
| Total Efficiency (%) | 83.6 | 83.0 |
| Feed flow (Nm³/h - kg/h) | 40.8 | 32.6 |
| E 1 (kW) | 9.8 | 31.6 |
| E 2 (kW) | 23.4 | - |
| E 3 (kW) | 557.0 | 538.5 |
| Air compressor (kW) | 29.6 | 23.2 |

There are several advantages of converting ethanol to methane before further processing in the fuel cell stack. The potential for the problems associated with carbon formation are reduced. The heat exchanger (E2) for heating up the gas to the temperature required at the inlet to the anode is not necessary. The electric efficiency is increased and the combined heat exchanger duties and air compressor work are reduced.

An investment in an ethanol methanation reactor of the same size as the prereformer in the conventional system shown in Fig. 1 is required. However, an effective catalyst could lead to a reduction of the volume of the reactor required also because the ethanol is free of sulphur, which is a strong poison for catalysts.

Table 2 shows the effect of the recycle ratio in a fuel based on ethanol and water and the electrical efficiency.

**Table 2**

| Fuel ethanol conc. (vol%) | O/C ratio of fuel* | Recycle ratio | Total O/C ratio of recycle and fuel** | Electrical efficiency (%) |
|---|---|---|---|---|
| 96 | 0.56 | 50 | 1.94 | 56.3 |
| 96 | 0.56 | 60 | 2.24 | 55.9 |
| 67 | 1.3 | 50 | 2.68 | 54.8 |
| 61 | 1.55 | 50 | 2.93 | 54.4 |
| 14 | 10.4 | 0 | 10.4 | _*** |

| | | | | |
|---|---|---|---|---|
| * corresponds to the gaseous stream at 6 in fig. 2 ** corresponds to the stream leaving ejector 7 in fig. 2 *** not available | | | | |

It can be seen that increasing the total O/C ratio by increasing the recycle ratio while maintaining the same ethanol concentration in the fuel leads to a slight decrease in the electrical efficiency of the fuel processing method due to carbon formation. Increasing the total O/C ratio by providing more water via the fuel also leads to a slight decrease in the electrical efficiency. However, the electrical efficiency is acceptable in all cases even in the absence of recycle when the ethanol fuel has a high O/C ratio.

## Claims

1. A method for generating electricity using a solid oxide fuel cell stack in combination with a methanation reactor, comprising the steps of:
(a) supplying a feed stream comprising ethanol to a methanation reactor containing catalytic material active in the decomposition and methanation of ethanol
CH₃CH₂OH ↔ CH₄ + CO + H₂
CO + H₂O ↔ CO₂ + H₂
CO + 3H₂ ↔ CH₄ + H₂O
(b) converting the feed stream comprising ethanol in the methanation reactor under adiabatic conditions to produce an effluent fuel comprising methane, carbon monoxide, carbon dioxide, hydrogen and water and a temperature increase across the methanation reactor;
(c) transferring the effluent fuel comprising methane, carbon monoxide, carbon dioxide, hydrogen and water to the anode of a solid oxide fuel cell stack comprising at least one solid oxide fuel cell;
(d) providing the cathode of the solid oxide fuel cell stack with an oxygen-containing gas; and
(e) converting the fuel comprising methane, carbon monoxide, carbon dioxide, hydrogen and water and the oxygen-containing gas to electricity in the solid oxide fuel cell stack.

2. Method according to claim 1, wherein the feed stream comprising ethanol is vaporised before being supplied to the methanation reactor.

3. Method according to claims 1 or 2, wherein the off gas produced at the anode of the solid oxide fuel cell stack is partially recycled to an ejector placed upstream the methanation reactor.

4. Method according to claim 3, wherein 50% of the anode off gas is recycled to the ejector.

5. Method according to claim 1, wherein the catalytic material comprises a catalyst active in ethanol decomposition without forming ethylene.

6. Method according to claim 1, wherein the catalytic caterial is a nickel, cobalt, copper, rhodium, ruthenium or other noble metal containing catalyst.

## Patentansprüche

1. Verfahren zur Erzeugung von Elektrizität unter Verwendung eines Festoxidbrennstoffzellenstapels in Kombination mit einem Methanisierungsreaktor, umfassend die Schritte:
(a) Zuführen eines Einsatzstromes umfassend Ethanol zu einem Methanisierungsreaktor, welcher katalytisches Material enthält, das bei der Zersetzung und Methanisierung von Ethanol aktiv ist
CH₃CH₂OH ↔ CH₄ + CO + H₂
CO + H₂O ↔ CO₂ + H₂
CO + 3H₂ ↔ CH₄ + H₂O
(b) Umwandeln des Einsatzstroms bzw. Zustromes, welcher Ethanol umfasst, in dem Methanisierungsreaktor unter adiabatischen Bedingungen, um ein Abgas (effluent fuel), welches Methan, Kohlenstoffmonoxid, Kohlenstoffdioxid, Wasserstoff und Wasser umfasst, und eine Temperaturerhöhung über dem Methanisierungsreaktor zu erzeugen;
(c) Befördern des Abgases, welches Methan, Kohlenstoffmonoxid, Kohlenstoffdioxid, Wasserstoff und Wasser umfasst, zu der Anode eines Festoxidbrennstoffzellenstapels, welcher wenigstens eine Festoxidbrennstoffzelle umfasst;
(d) Versorgen der Kathode des Festoxidbrennstoffzellenstapels mit einem sauerstoffhaltigen Gas; und
(e) Umwandeln des Kraftstoffs, welcher Methan, Kohlenstoffmonoxid, Kohlenstoffdioxid, Wasserstoff und Wasser umfasst, und des sauerstoffhaltigen Gases in dem Festoxidbrennstoffzellenstapel in Elektrizität.

2. Verfahren nach Anspruch 1, wobei der Einsatzstrom, welcher Ethanol umfasst, verdampft wird, bevor er dem Methanisierungsreaktor zugeführt wird.

3. Verfahren nach Anspruch 1 oder 2, wobei das Abgas, welches an der Anode des Festoxidbrennstoffzellenstapels erzeugt wird, teilweise zu einem Ejektor bzw. Ausstoßer zurückgeführt wird, welcher stromaufwärts des Methanisierungsreaktors angeordnet ist.

4. Verfahren nach Anspruch 3, wobei 50% des Abgases der Anode zu dem EjeKtor zurückgeführt wird.

5. Verfahren nach Anspruch 1, wobei das katalytische Material einen Katalysator umfasst, welcher bei der Zersetzung von Ethanol ohne Bildung von Ethylen aktiv ist.

6. Verfahren nach Anspruch 1, wobei das katalytische Material ein Nickel, Kobalt, Kupfer, Rhodium, Ruthenium oder ein anderes Edelmetall enthaltender Katalysator ist.

## Revendications

1. Un procédé de génération d'électricité en utilisant un empilement de piles à combustible à oxyde solide en combinaison avec un réacteur de méthanation, comprenant les étapes de :
(a) fourniture d'un flux d'alimentation comprenant de l'éthanol à un réacteur de méthanation contenant un matériau catalytique actif dans la décomposition et la méthanation de l'éthanol
CH₃CH₂OH ↔ CH₄ + CO + H₂
CO + H₂O ↔ CO₂ + H₂
CO + 3H₂ ↔ CH₄+ H₂O
(b) conversion du flux d'alimentation comprenant de l'éthanol dans le réacteur de méthanation sous conditions adiabatiques pour produire du combustible effluent comprenant du méthane, du monoxyde de carbone, du dioxyde de carbone, de l'hydrogène et de l'eau et une augmentation de température au travers du réacteur de méthanation ;
(c) transfert du carburant effluent comprenant du méthane, du monoxyde de carbone, du dioxyde de carbone, de l'hydrogène et de l'eau à l'anode d'un empilement de piles à combustible à oxyde solide comprenant au moins une pile à combustible à oxyde solide ;
(d) apport d'un gaz contenant de l'oxygène à la cathode de l'empilement de piles à combustible à oxyde solide ;
(e) conversion du carburant comprenant du méthane, du monoxyde de carbone, du dioxyde de carbone, de l'hydrogène et de l'eau et du gaz contenant de l'oxygène en électricité dans l'empilement de piles à combustible à oxyde solide.

2. Le procédé selon la revendication 1, dans lequel le flux d'alimentation comprenant de l'éthanol est vaporisé avant d'être fourni au réacteur de méthanation.

3. Le procédé selon la revendication 1 ou 2, dans lequel le gaz de dégagement produit à l'anode de l'empilement de piles à combustible à oxyde solide est partiellement recyclé vers un éjecteur disposé en aval du réacteur de méthanation.

4. Le procédé selon la revendication 3, dans lequel 50% du gaz de dégagement de l'anode est recyclé vers l'injecteur.

5. Le procédé selon la revendication 1, dans lequel le matériau catalytique comprend un catalyseur actif dans la décomposition de l'éthanol sans former d'éthylène.

6. Le procédé selon la revendication 1, dans lequel le matériau catalytique est du nickel, du cobalt, du cuivre, du rhodium, du ruthénium ou un autre métal noble contenant du catalyseur.
